# EUROPEAN PATENT APPLICATION

(11) **EP 4 650 556 A2**
(43) Date of publication of application: **19.11.2025**
(21) Application number: 25171407.7
(22) Date of filing: 17.04.2025
(51) Int. Cl.: E05B 73/00, H01R 13/639, E05B 37/02

(54) **DATA PORT SECURITY LOCK**

(30) Priority: 22.04.2024 US 202463637132 P
(71) Applicant: ACCO Brands Corporation, Lake Zurich, IL 60047-8997 (US)
(72) Inventor: Kao, James, Fremont, CA 94536 (US)
(74) Representative: Forresters IP LLP

(57) **Abstract**

A security apparatus includes a body having an opening at a forward edge of the body, a lock cylinder located within the body, and an engagement mechanism including a first finger and a second finger extending out of the body through an opening. The lock cylinder is configured to move the first and second fingers between a first position in which the engagement mechanism is removable from the data port and a second position in which the engagement mechanism is secured to the data port. Each of the first and second fingers includes a surface configured to engage the sidewall of the portable electronic device. An alignment member is configured to extend into the opening and remain within the opening when the engagement mechanism is in the second position, wherein the alignment member includes a surface configured to engage the forward edge of the body.

## Description

### CROSS-REFERENCE TO RELATED APPLICATIONS

This patent application claims priority to U.S. Provisional Patent Application No. 63/637,132, filed April 22, 2024, the entire contents of which are incorporated herein by reference.

### FIELD OF THE INVENTION

The present invention relates to security apparatuses for portable electronic devices, such as laptop computers, tablet computers, smartphones, and other mobile devices, and data ports that receive the same.

### SUMMARY

In some aspects, the techniques described herein relate to a security apparatus configured to extend through an opening of a data port to engage a sidewall of a portable electronic device, the security apparatus including: a body having an opening at a forward edge of the body; a lock cylinder located within the body; an engagement mechanism including a first finger and a second finger extending out of the body through an opening, wherein the lock cylinder is configured to move the first and second fingers between a first position in which the engagement mechanism is removable from the data port and a second position in which the engagement mechanism is secured to the data port, and wherein each of the first and second fingers includes a surface configured to engage the sidewall of the portable electronic device; and an alignment member configured to extend into the opening and remain within the opening when the engagement mechanism is in the second position, wherein the alignment member includes a surface configured to engage the forward edge of the body.

In some aspects, the techniques described herein relate to a security apparatus, wherein the alignment member is integrally formed as a single component with the first finger and the second finger.

In some aspects, the techniques described herein relate to a security apparatus, wherein the surface of each of the first and second fingers is parallel to the surface of the alignment member.

In some aspects, the techniques described herein relate to a security apparatus, wherein the surface of the first finger is coplanar with the surface of the second finger.

In some aspects, the techniques described herein relate to a security apparatus, wherein the surface of the first finger is offset from the surface of the alignment member by a step therebetween such that the surface of the first finger is radially and axially offset from the surface of the alignment member.

In some aspects, the techniques described herein relate to a security apparatus, wherein each of the first finger and the second finger includes an enlarged distal end having a raised lip defining a recessed bowl such that the raised lip is configured to extend around a data connector located within the data port, wherein the surface of each of the first finger and the second finger configured to engage the sidewall is formed on the raised lip.

In some aspects, the techniques described herein relate to a security apparatus, wherein the raised lip defines an axial extent of each of the first and second fingers, wherein a surface of the recessed bowl is axially spaced apart from the raised lip, and wherein the surface of each of the first finger and the second finger configured to engage the sidewall is disposed axially between the axial extent and the surface of the recessed bowl.

In some aspects, the techniques described herein relate to a security apparatus, wherein the surface of each of the first finger and the second finger configured to engage the sidewall is located radially outward of the recessed bowl.

In some aspects, the techniques described herein relate to a security apparatus, wherein the lock cylinder is the lock cylinder of a combination lock or the lock cylinder of a keyed lock.

In some aspects, the techniques described herein relate to a security apparatus, wherein the forward edge of the body includes a plate member made of an abrasion-resistant material, wherein the surface of the alignment member is configured to engage the plate member.

In some aspects, the techniques described herein relate to a security apparatus, wherein the alignment member is configured to prevent rotation of the security apparatus relative to the portable electronic device when positioned within the opening of the data port.

In some aspects, the techniques described herein relate to a security apparatus, wherein the alignment member prohibits an off-center or askew insertion of the engagement mechanism into the opening in which the engagement mechanism makes contact with a data connector located within the data port.

In some aspects, the techniques described herein relate to a security apparatus, further including a plunger coupled to the lock cylinder and configured to translate within the body between the first finger and the second finger to move the first and second fingers between the first position and the second position.

In some aspects, the techniques described herein relate to a security apparatus, further including an input member coupled to the plunger and externally accessible on the body, wherein the input member is movable in response to an input by a user to translate the plunger relative to the body.

In some aspects, the techniques described herein relate to a security apparatus, further including an elastic ring configured to bias the first finger and the second finger to the first position.

In some aspects, the techniques described herein relate to a security apparatus configured to extend through an opening of a data port to engage a sidewall of a portable electronic device, the security apparatus including: a body having an opening at a forward edge of the body; a lock cylinder located within the body; an engagement mechanism including a first finger and a second finger extending out of the body through an opening, wherein the lock cylinder is configured to move the first and second fingers between a first position in which the engagement mechanism is removable from the data port and a second position in which the engagement mechanism is secured to the data port, and wherein each of the first and second fingers includes a surface configured to engage the sidewall of the portable electronic device; wherein each of the first finger and the second finger includes an enlarged distal end having a raised lip defining a recessed bowl such that the raised lip is configured to extend around a data connector located within the data port, wherein the surface of each of the first finger and the second finger configured to engage the sidewall is formed on the raised lip.

In some aspects, the techniques described herein relate to a security apparatus, wherein the raised lip defines an axial extent of each of the first and second fingers, wherein a surface of the recessed bowl is axially spaced apart from the raised lip, and wherein the surface of each of the first finger and the second finger configured to engage the sidewall is disposed axially between the axial extent and the surface of the recessed bowl.

In some aspects, the techniques described herein relate to a security apparatus, wherein the surface of each of the first finger and the second finger configured to engage the sidewall is located radially outward of the recessed bowl.

In some aspects, the techniques described herein relate to a security apparatus, wherein the raised lip of the first finger and the raised lip of the second finger collectively surround the recessed bowl, the recessed bowl formed in part by the first finger and in part by the second finger.

In some aspects, the techniques described herein relate to a security apparatus configured to extend through an opening formed in a sidewall of a portable electronic device, the security apparatus including: a body; a lock cylinder located within the body; an engagement mechanism including a first finger, a second finger, and a plunger configured to move the first finger and the second finger from a first position in which the engagement mechanism is removable from the opening to a second position in which the engagement mechanism is secured within the opening, wherein the first finger includes an enlarged distal end having a raised lip about a periphery of the enlarged distal end to define a recessed bowl within the raised lip, the raised lip defining a surface configured to engage the sidewall of the portable electronic device in the second position and disengage the sidewall of the portable electronic device in the first position; and wherein the second finger includes an enlarged distal end having a raised lip about a periphery of the enlarged distal end to define a recessed bowl within the raised lip, the raised lip defining a surface configured to engage the sidewall of the portable electronic device in the second position and disengage the sidewall of the portable electronic device in the first position.

Other aspects of the invention will become apparent by consideration of the detailed description and accompanying drawings.

### BRIEF DESCRIPTION OF THE DRAWINGS

Fig. 1 is a side view of a system having a portable electronic device and a security apparatus.
Fig. 2 is an enlarged perspective view of an engagement mechanism of the security apparatus.
Fig. 3 is a perspective view of the engagement mechanism and components of a lock mechanism of the security apparatus that engage therewith.
Fig. 4 is a top view of the engagement mechanism.
Fig. 5 is a perspective view of the system of Fig. 1 illustrating a data connector within the portable electronic device.
Fig. 6 is a cross-sectional view of the system of Fig. 1.
Fig. 7 is a perspective view of a security apparatus according to another embodiment.
Fig. 8 is a cross-sectional view of the security apparatus in an unlocked state relative to a data port of the portable electronic device.
Fig. 9 is a cross-sectional view of the security apparatus in a locked state relative to the data port of the portable electronic device.
Fig. 10 is a perspective view of an aperture defining a data port of a portable electronic device according to the prior art.
Fig. 11 is a perspective view of an aperture defining a data port of the portable electronic device of Fig. 1.
Fig. 12 is a top view of a data connector positioned within the prior art portable electronic device of Fig. 10, adjacent the data port.
Fig. 13 is a top view of a data connector positioned within the portable electronic device of Fig. 11, adjacent the data port.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

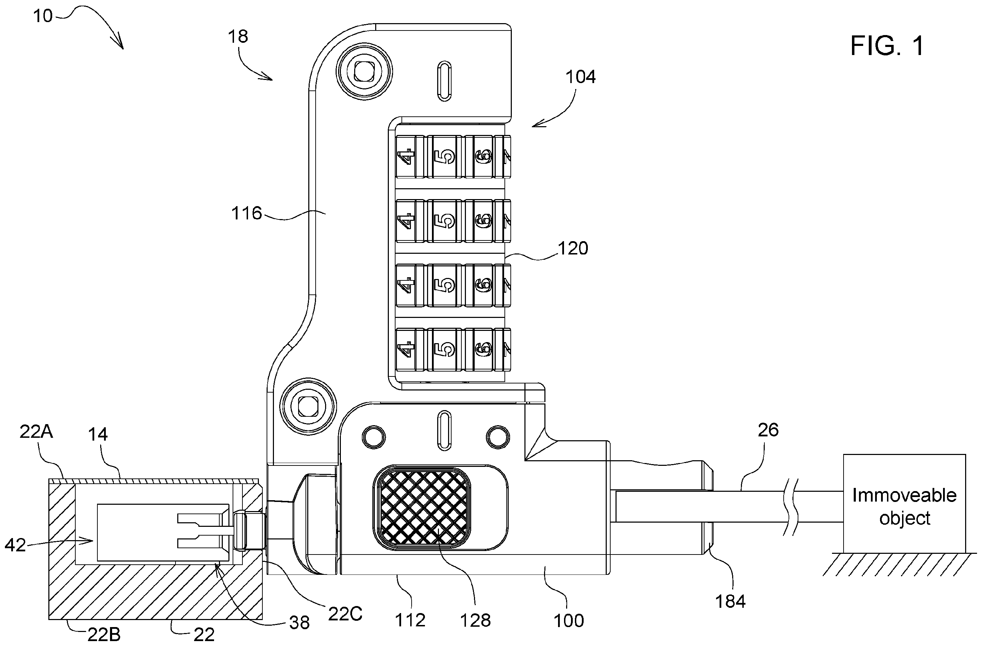

Fig. 1 illustrates a system 10 including a portable electronic device 14 and a security apparatus 18. In the illustrated embodiment, the portable electronic device 14 is a laptop computer, but may alternatively be a tablet computer, a smartphone, an eReader, an MP3 player, and the like. The illustrated portable electronic device 14 includes a housing 22, a processor (not shown) positioned within the housing 22, and a screen (not shown) supported by the housing 22. In some embodiments, the screen may be a touchscreen. In some embodiments, such as the illustrated embodiment, the portable electronic device 14 may also or alternatively include other input mechanisms, such as a keyboard, keypad, or touchpad. The security apparatus 18 is connected to the portable electronic device 14 and includes a cable 26 to secure the portable electronic device 14 to an immovable object, such as a table, a chair, a bracket, a wall, and the like.

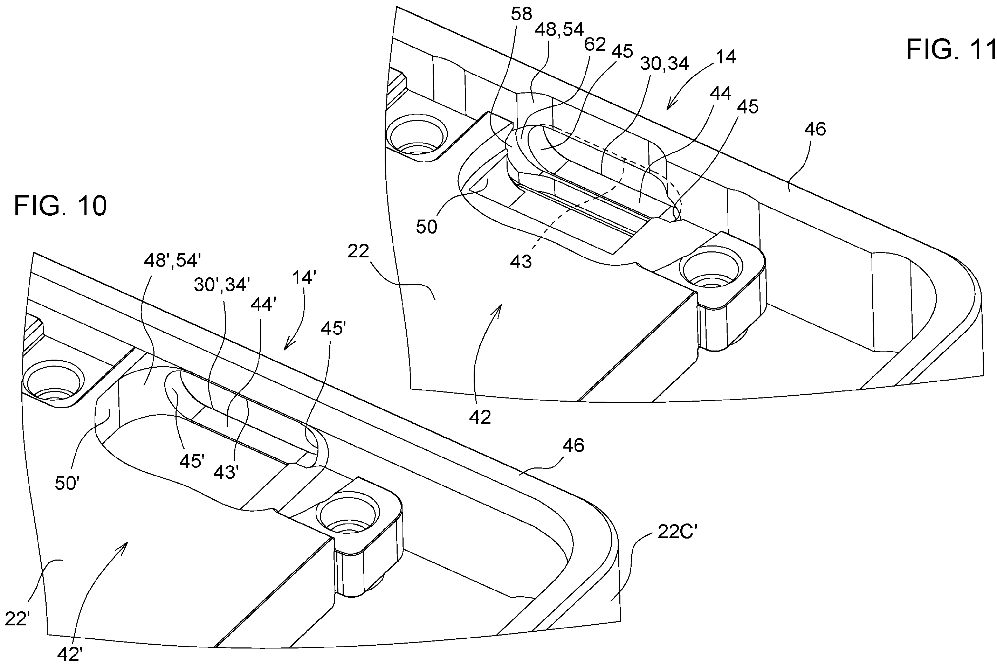

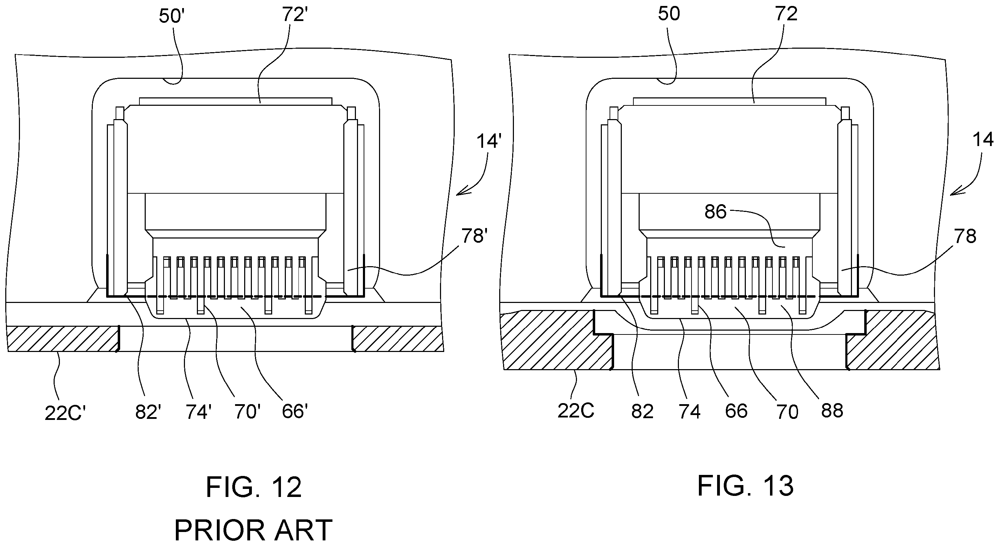

As shown in Figs. 11 and 13, the portable electronic device 14 has an aperture 30 (e.g., opening, slot), formed in the housing 22. The illustrated aperture 30 is a data port 34 that provides access to a data connector 38 (Fig. 13) positioned within an interior volume 42 of the portable electronic device 14. In some embodiments, the data port is a USB port (e.g., a USB-A port, a USB-B port, a USB mini port, a USB micro port, a USB-C port, or the like) and, as shown, is a USB-C port. In other embodiments the data port may be a data port of an alternative design.

In contrast to some security apparatuses designed to engage traditional security slots (i.e., not a data port, a slot that does not provide access to a data port), the security apparatus 18 is configured to engage the aperture 30 of the data port 34, effectively blocking access to the data port 34 and data connector 38 positioned therein. As such, the data port 34 is configured to function in a first use to provide access for a data cable to access the data connector 38 and a second use to provide a mating surface for the security apparatus 18.

Figs. 10 and 12 illustrate an aperture 30' on a portable electronic device 14' according to the prior art. The aperture 30' provides access to the interior volume 42' of the device 14' and specifically provides access to a data connector 38' positioned therein, as shown in Fig. 12. The aperture 30' is defined by an upper wall 43', a lower wall 44', and two opposing sidewalls 45'. As shown in Fig. 10, the upper and lower walls 43', 44' are generally parallel to each other. The walls 43', 44', 45', collectively form the aperture 30' through which a data cable may be inserted to electrically and mechanically couple to the data connector 38'. Certain devices may couple to the data connector without a physical data cable (e.g., a data storage device such as a flash drive) or other devices having a data connector that mates with the data connector 38'. Such devices are similarly inserted through the aperture 30'.

The aperture 30' extends from an outer surface 46' of the portable electronic device 14' to an inner surface 48' of the portable electronic device 14'. The inner surface 48' defines a portion of a pocket 50' within the interior volume 42' in which the data connector 38' is positioned and secured. The inner surface 48' at the pocket 50' is partially defined by curved sidewalls 54' adjacent the sidewalls 45' of the aperture 30' that extend away from the outer wall 46' and further into the interior volume 42' of the portable electronic device 14'. Fig. 12 illustrates the data connector 38' relative to the aperture 30' and specifically illustrates the relatively tight clearance between the data connector 38' and the aperture 30' that prevents a security apparatus (such as the security apparatus 18) from engaging and forming a secure connection with the aperture 30'.

Figs. 11 and 13 illustrate the aperture 30, similar to the aperture 30' in providing access to a data connector 38 (Fig. 13), though dissimilar as described herein. The aperture 30 includes an intermediate step 58 between the outer surface 46 and the inner surface 48 along the two sidewalls 45 of the aperture 30. Curved sidewalls 54 form a portion of a pocket 50 for receiving the data connector 38, though the step 58 cuts into the curved sidewalls 54 to form a ledge 62 adjacent each sidewall 45. The ledge 62 is generally parallel to the outer surface 46 (i.e., perpendicular to the direction in which a connector of a data cord is inserted into the aperture). Written another way, a first profile and a second profile are defined around the aperture 30 on the inner surface 48 of the housing 22. With reference to the thickness of the housing 22 between the outer and inner surfaces 46, 48, the second profile is located between the first profile and the interior volume 42 of the portable electronic device 14. The first profile has a first height and a first width, and the second profile has a second height and a second width. The second width is greater than the first width to define the ledges 62 adjacent the opposite edges 45 of the aperture 30.

In addition to the modifications to the aperture 30 through the portable electronic device 14, the data connector 38 itself is modified to facilitate use of the security apparatus 18. Fig. 12 illustrates a data connector 38' according to the prior art, and Fig. 13 illustrates a data connector 38 configured to permit insertion of the security apparatus 18 into the aperture 30. As shown, each data connector 38', 38 includes a contact carrier 66' 66 supporting a plurality of contacts 70', 70 thereon. The connector 38', 38 extends in a first direction from a rearward end 72', 72 to a forward end or distal end 74' 74. In operation, when a data cable is inserted through the data port 34', 34 and engages the contacts 70', 70 of the contact carrier 66', 66, the data cable slides first over the distal end 74', 74 and then towards the rearward end 72', 72. The contacts 66, 66' extend longitudinally in the first direction. A receptacle shell 78', 78 surrounds the contact carrier 66', 66 of the connector 38', 38 and defines a receptacle opening 82', 82 through which the contacts 70' 70 are accessible. As shown in the difference between Figs. 12 and 13, the receptacle opening 82' of the prior art is located forward of the contact carrier 66' such that the entirety of the contact carrier 66' is surrounded by and within the receptacle shell 78'. In contrast, the receptacle shell 78 illustrated in Fig. 13 is shortened (e.g., by 1.1 mm, or by more than 1.0 mm, or by 0.5-1.5 mm) such that the receptacle opening 82' is located between the rearward end 72 and the forward end 74 of the connector such that a first portion 86 of the contact carrier 66 is positioned within the receptacle shell 78 and a second portion 88 of the contact carrier 66 is positioned outside of the receptacle shell 78. At least some of the contacts 70 extend from the first portion 86 to the second portion 88. The receptacle shell 78 includes an upper wall, a lower wall, and first and second sidewalls connecting the upper wall to the lower wall. A cross-section of the first portion 86 of the connector 38 is located wholly within the receptacle shell 78. The inclusion of the ledge 62 and the decreased size of the receptacle shell 78 provide clearance for the security apparatus to engage the aperture 30 of the data port 34 of the portable electronic device 14. In some embodiments, more than one contact carrier 66 of a data connector 38 sharing the same receptacle shell 78. In some embodiments, each of the contact carriers 66 is positioned adjacent an aperture 30 of the housing 22 configured to couple to the security apparatus 18. In other embodiments, only one of the two contact carriers 66 may be located adjacent an aperture 30 configured to couple to the security apparatus 18, with the other contact carrier 66 positioned adjacent an opening (similar to opening 30') that merely permits insertion of a data cable.

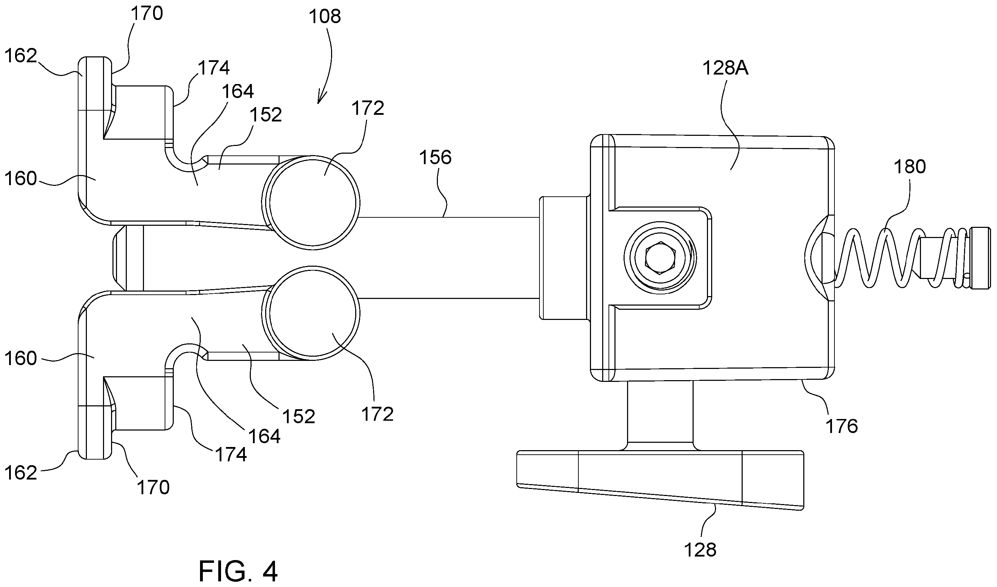

Figs. 1-6 illustrate the security apparatus 18 according to a first embodiment. The security apparatus 18 includes a body 100, a lock mechanism 104, and an engagement mechanism 108. The body 100 is made of a relatively hard material, such as metal, and houses other components of the security apparatus 18. In the embodiment shown, the body 100 includes a first portion 112 for housing the engagement mechanism 108, is generally cylindrical, and extends in a first direction. A forward edge of the body 100 includes an opening through which a portion of the engagement mechanism 108 passes out of the body 100 to engage the portable electronic device 14. The body 100 further includes a second portion 116 that houses the lock mechanism 104 and extends transverse (e.g., perpendicular) to the first portion 112. In other embodiments, the body 100 may be a single cylindrical lock body or can have other, non-cylindrical shapes. As shown, the first portion 112 includes multiple separate components including a rearward portion that supports an input member 128 and a forward portion that supports at least a portion of the engagement mechanism 108. In some embodiments, the forward portion may be movable (e.g., rotatable) relative to the rearward portion.

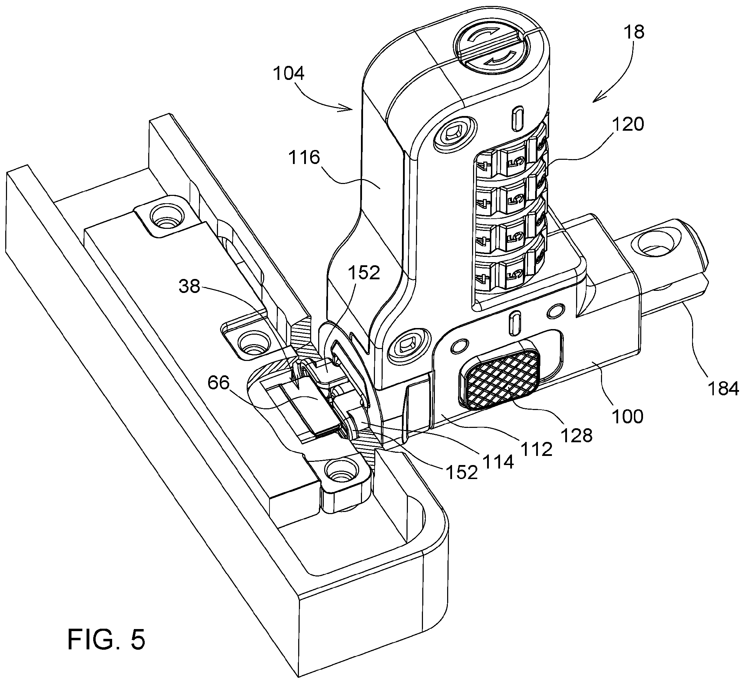

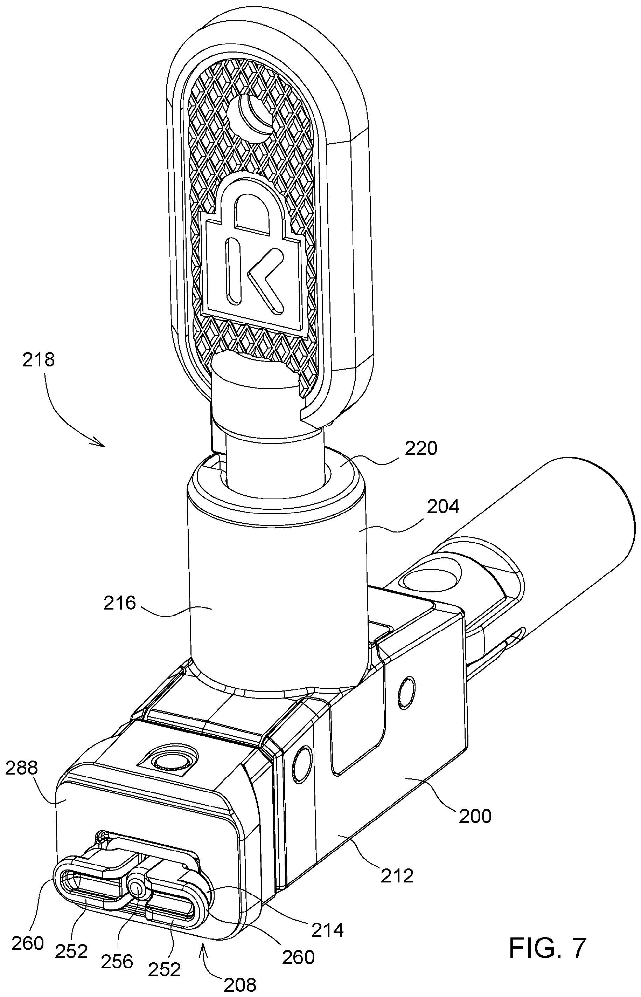

As shown in Figs. 1 and 5, the illustrated lock mechanism 104 includes a combination-style lock, though in other embodiments, such as Figs. 7-9, the lock mechanism may otherwise include a keyed lock. The lock mechanism 104 includes a lock cylinder 120 and an output member 124. The lock cylinder 120 and the output member 124 are positioned within the second portion 116 of the body 48 (though at least a portion of the output member 124 extends into the first portion 112).

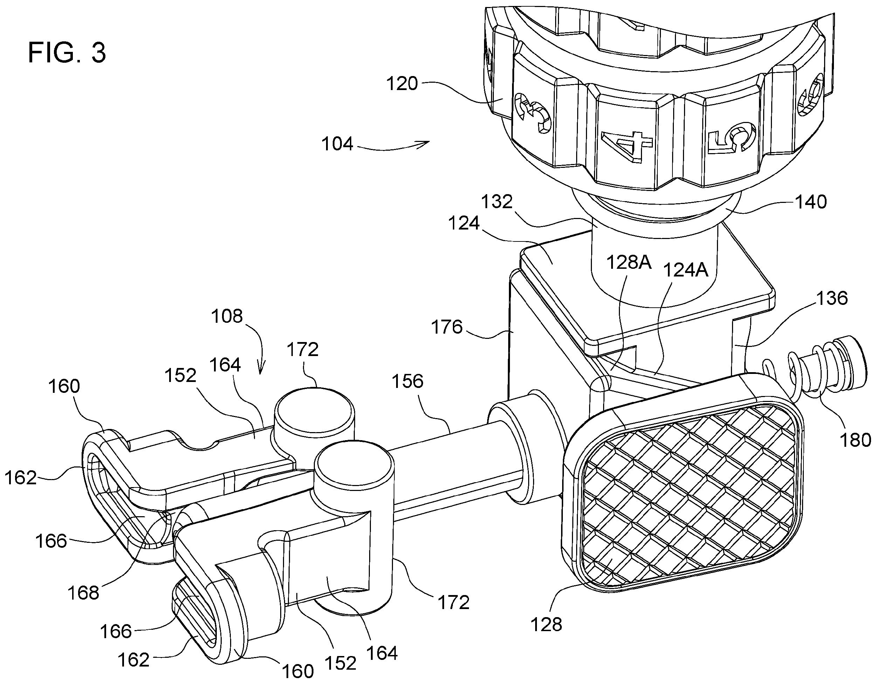

As shown in Figs. 3-4, the output member 124 is coupled to the lock cylinder 120 and is selectively capable of translating against a spring bias dependent upon whether the lock cylinder 120 is unlocked (e.g., if the correct combination is selected, if the key is rotated to a first position) or locked (e.g., if the correct combination is not selected, if the key is rotated to a second position). The output member 124 includes an inclined surface 124A (inclined relative to the direction of travel) that engages an inclined surface 128A of an input member 128 such that movement of the input member 128 results in movement of the output member 124. In particular, the output member 124 includes a stem 132 that extends into the lock cylinder 120, and a cam body 136 having the inclined surface 124A. The inclined surfaces 124A, 128A are biased into engagement with one another via a spring 140 positioned on the stem 132. If the lock cylinder 120 is unlocked, the output member 124 is movable by a user (indirectly via the input member 128) to move the engagement mechanism 108. If the lock cylinder 120 is locked, the output member 124 is precluded from movement, thereby precluding movement of the input member 128.

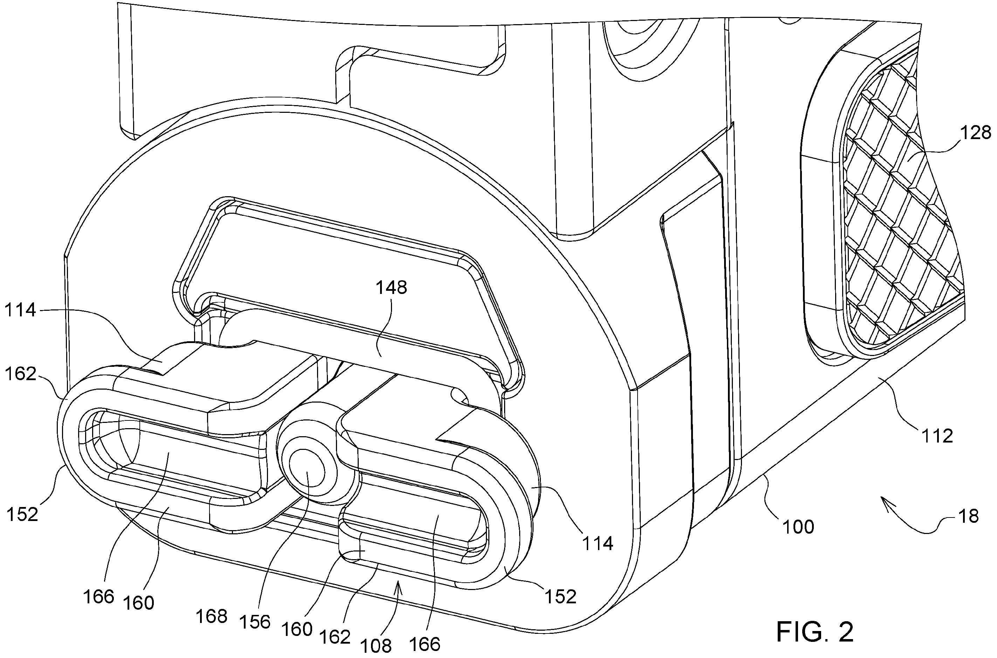

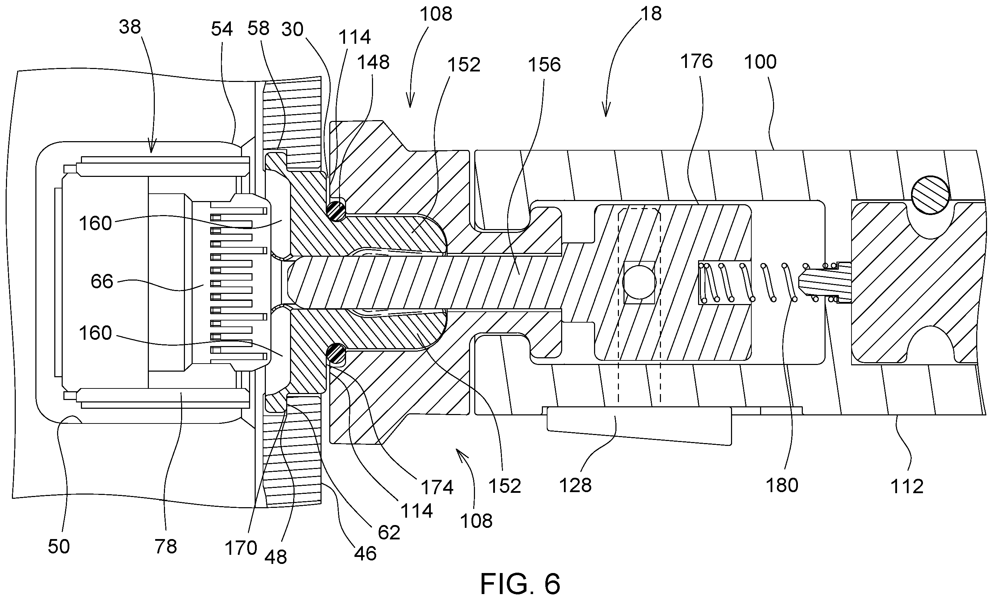

As shown in Figs. 2-4 and 6, the illustrated engagement mechanism 108 includes two fingers 152 and a plunger 156. The fingers 152 are movable (e.g., pivotable) between an unlocked or retracted position and a locked or expanded position. The unlocked or retracted position may also be referred to as a first position. The locked or expanded position may also be referred to as a second position. An elastic ring 148 extends around the two fingers 152 and biases the fingers 152 towards one another (i.e., towards the unlocked position). When the fingers 152 are in the unlocked position, the engagement mechanism 108 is insertable into and removable from the aperture 30 in the portable electronic device 14. When the fingers 152 are in the locked position, the engagement mechanism 108 engages the housing 22 of the portable electronic device 14 to secure the security apparatus 18 to the device 14. Each finger 152 includes an enlarged and outwardly-extending distal end 160 and a relatively narrower stem 164. The enlarged distal ends 160 facilitate engaging (e.g., contacting or grabbing) the housing 22 of the portable electronic device 14 so that the security apparatus 18 cannot be pulled out of the aperture 30. Particularly, the enlarged distal ends 160 engage the ledges 62 formed adjacent the sidewalls 54 (Fig. 6). The relatively narrower stems 164 create a recessed area 168 between the fingers 152 for receiving the plunger 156. Each finger 152 also includes a boss 172 at an end of the stem 164 opposite from the enlarged distal end 160. The bosses 172 define spaced apart pivot axes for the fingers 152.

A rear edge (i.e., opposite the front edge that is inserted first into the aperture 30) of each enlarged distal end 160 includes an alignment member 114 formed to the outer side of each finger 152 adjacent the location where the engagement mechanism 108 extends out of the body 100. In the embodiment shown, the alignment member 114 is integrally formed as a single component with the fingers 152 and is formed separately from the body 100. The two alignment members 114 and the space therebetween substantially correspond to the cross-section of the aperture 30 into which the security apparatus 18 is received. The alignment member 114 is configured to extend into and remain within the aperture 30 (i.e., within the plane of the opening 30) when the engagement mechanism 108 secures to the portable electronic device 14. The alignment member 114 assists in insertion of the security apparatus 18 into the aperture 30 and, in some embodiments, prevents rotation of the security apparatus 18 relative to the portable electronic device 14. The alignment member 114 also prohibits an off-center or askew insertion of the engagement mechanism 108 into the aperture 130 in which the engagement mechanism 108 makes contact with the contact carrier 66. In other embodiments, the alignment member 114 may be spaced apart and separate from the fingers 152, instead formed on a forward surface of the first portion 112 of the body 100 on either side of the engagement mechanism 108.

With continued reference to Figs. 2-4 and 6, the distal ends 160 of the fingers 152 include a recessed bowl 166 providing the appearance of a raised lip 162 about the periphery thereof to define the recessed bowl 166. The raised lip 162 extends off the forward end such that the recessed bowl 166 is fully formed on the forward end of the fingers 152. As shown in Fig. 2, the raised lip 162 extends substantially along the three outer edges (i.e., not the edge adjacent the plunger 156) of the distal ends 160 such that the two fingers 152 collectively form the recessed bowl 166. In other embodiments, only the outermost edge (i.e., opposite the edge adjacent the plunger 156) of each finger 152 includes the raised lip 162.

An intermediate (though rearwardly facing) side 170 of the distal ends 160 is formed on a rear side of the raised lip 162, forward of the alignment member 114 and forms a stepped rearward edge of each enlarged distal end 160. The raised lip 162 defines an axial extent of each of the first and second fingers 152. The surface of the recessed bowl 166 is axially spaced apart from the raised lip 162. The rearwardly facing surface of the intermediate side of the fingers 152 is disposed axially between the axial extent (i.e., the point furthest within the data port 34) defined by the raised lip 162 and the surface of the recessed bowl 166. The surface 170 is also located radially outward of the recessed bowl 166. The intermediate step 170 defines the surface that contacts the portable electronic device 14 to prevent unauthorized removal of the security apparatus 18 from the portable electronic device 14. In the embodiment shown, the intermediate steps 170 of the two fingers 152 are coplanar with one another. The surface of the rearward side of each finger 152 is stepped and includes a first surface 170 and a second surface 174. The first and second surfaces 170, 174 are generally parallel to one another and offset from one another by the height of the step therebetween. In particular, the first and second surfaces 170, 174 are offset in two directions relative to each other. For example, the first and second surfaces 170, 174 are axially offset from each other (i.e., along a length of the fingers 152). The first and second surfaces 170, 174 are also radially offset from each other (i.e., along a width of the fingers 152). The first surface 170 of each finger 152 engages a ledge 62 adjacent a respective sidewall 45 of the aperture 30. In the locked or engaged position of the fingers 152, the first surface 170 is generally parallel to the mating ledge 62. The second surface 174 of each finger 152 is formed by the alignment member 114 positioned within the aperture 30.

When inserted into the data port 34, the distal ends 160 of the fingers 152 are shaped to extend around the data connector 38. Written another way, a portion of the data connector 38 is received within the recessed bowl 166 of the fingers 152 in one or both of the locked and unlocked positions of the fingers 152. Fig. 6 illustrates the fingers 152 overlaying (though not contacting) a portion of the contact carrier 66 of the data connector 38, as viewed from above. The structure described herein and shown in Figs. 2-4 and 6 provides sufficient structure to define the first and second engaging surfaces 170, 174 while providing unobstructed movement around the contact carrier 66 (and contacts 70 thereon) when transitioning between the unlocked and disengaged position and the locked and engaged position.

The plunger 156 is shown in greater detail in Figs. 3-4 and is positioned between the fingers 152 to selectively move the fingers 152 from the unlocked position to the locked position. The plunger 156 is coupled (e.g., directly, formed integrally with, indirectly) to the input member 128 and is selectively movable (e.g., slidable) with the input member depending on whether the lock mechanism 104 is locked or unlocked. In particular, the plunger 156 extends at a first end between the fingers 152 and is coupled at a second (opposite) end to a cam follower 176 having the inclined surface 128A. The input member 128 is a switch that is slidable between a first position and a second position, the switch being biased to the first position via springs 140, 180. When the input member 128 is in the first position, the plunger 156 displaces the fingers 152 to the locked position. When the input member 128 is moved against the bias of the springs 140, 180 to the second position, the plunger 156 is moved rearward such that the fingers 152 move to the unlocked position by way of the elastic ring 148 or other suitable biasing member. In other embodiments, the input member 128 may be movable but not biased to either of the first or second positions.

As shown in Fig. 1, the security apparatus 18 also includes a cable mount 184 supported by the first portion 112 of the body 48. The illustrated cable mount 184 is positioned at an end of the first portion 112, opposite the fingers 152. The cable mount 184 is configured to securely receive the flexible cable 26, which can be wrapped around an immovable object to secure the security apparatus 18 (and, thereby, the portable electronic device 14) to the immovable object.

Figs. 7-9 illustrate another example of a security apparatus 218. The security apparatus 218 is similar to the security apparatus 18 discussed above with reference to Figs. 1-6. Differences between the two security apparatuses 18, 218 are described below.

The security apparatus 218 includes a keyed lock cylinder 220 as opposed to the combination-style lock cylinder of the previous embodiment. Rotation of a key within the lock cylinder 220 results in rotation of a cam body (not shown) to translate the plunger 256 and move the fingers 252 between engaged and disengaged positions.

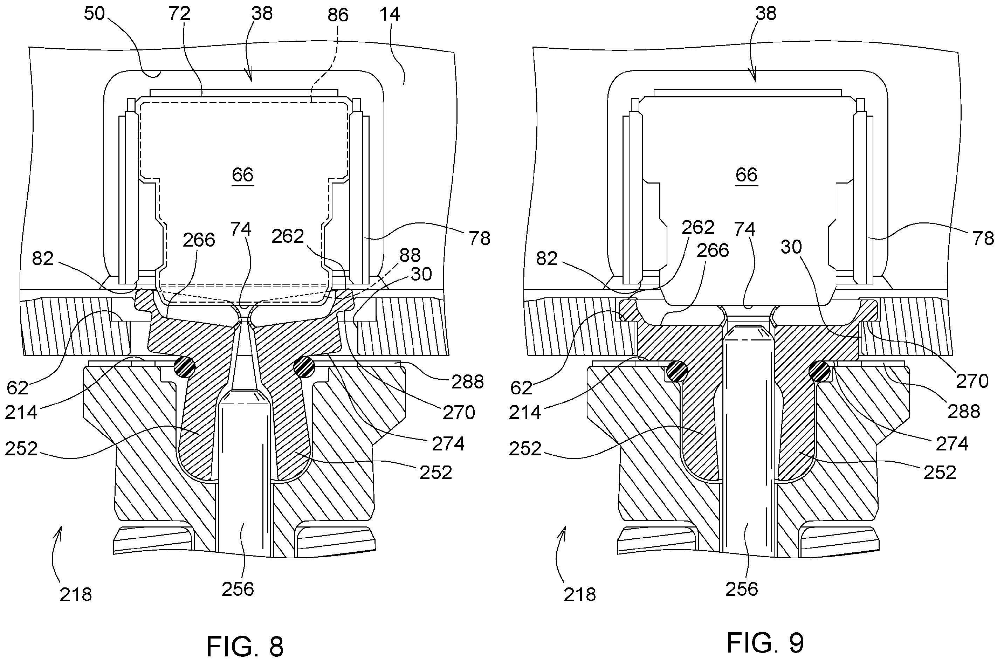

Fig. 8 illustrates the fingers 252 in the unlocked and retracted position. In the unlocked position, the maximum width of the engagement mechanism 208 (i.e., from an outermost edge of a first finger 252 to an outermost edge of a second finger 252) is less than the width of the aperture 30. As such, the engagement mechanism 208 is linearly insertable into the aperture 30. When fully seated such that the alignment member 214 is within the aperture 30 and the body 200 contacts the outer surface 46 of the portable electronic device, the distal ends 260 of the fingers 252 extend around the data connector 38 and avoid contact with the data connector 38.

Fig. 9 illustrates the fingers 252 in the locked and expanded position. In the locked position, the maximum width of the engagement mechanism 208 is greater than the width of the aperture 30 such that the fingers 252 are moved into engagement with the ledge 62 formed on the inner surface 48 of the portable electronic device. Similar to the unlocked position, the fingers 252 extend around the data connector 38 and avoid contact with the data connector 38. A plate member 288 is coupled to a forward edge of the body 200 (i.e., where the fingers 252 pass out of the body 200) and is configured to engage the outer surface 46 of the portable electronic device 14 when the security apparatus 218 is secured to the aperture 30 and may be made of an abrasion-resistant material. While the plate member 288 is illustrated with respect to the body 200, a similar plate member may be accommodated on the body 100 of the security apparatus 18.

When used in this specification and claims, the terms "comprises" and "comprising" and variations thereof mean that the specified features, steps or integers are included. The terms are not to be interpreted to exclude the presence of other features, steps or components.
The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

Preferred features and advantages of the invention are set forth in the following clauses.

Various features and advantages of the invention are set forth in the following claims.

### CLAUSES

1. A security apparatus configured to extend through an opening of a data port to engage a sidewall of a portable electronic device, the security apparatus comprising:
   a body having an opening at a forward edge of the body;
   a lock cylinder located within the body;
   an engagement mechanism including a first finger and a second finger extending out of the body through an opening, wherein the lock cylinder is configured to move the first and second fingers between a first position in which the engagement mechanism is removable from the data port and a second position in which the engagement mechanism is secured to the data port, and wherein each of the first and second fingers includes a surface configured to engage the sidewall of the portable electronic device; and
   an alignment member configured to extend into the opening and remain within the opening when the engagement mechanism is in the second position, wherein the alignment member includes a surface configured to engage the forward edge of the body.
2. The security apparatus of clause 1, wherein the alignment member is integrally formed as a single component with the first finger and the second finger.
3. The security apparatus of clause 2, wherein the surface of each of the first and second fingers is parallel to the surface of the alignment member.
4. The security apparatus of clause 3, wherein the surface of the first finger is coplanar with the surface of the second finger.
5. The security apparatus of clause 3, wherein the surface of the first finger is offset from the surface of the alignment member by a step therebetween such that the surface of the first finger is radially and axially offset from the surface of the alignment member.
6. The security apparatus of clause 1, wherein each of the first finger and the second finger includes an enlarged distal end having a raised lip defining a recessed bowl such that the raised lip is configured to extend around a data connector located within the data port, and wherein the surface of each of the first finger and the second finger configured to engage the sidewall is formed on the raised lip.
7. The security apparatus of clause 6, wherein the raised lip defines an axial extent of each of the first and second fingers, wherein a surface of the recessed bowl is axially spaced apart from the raised lip, and wherein the surface of each of the first finger and the second finger configured to engage the sidewall is disposed axially between the axial extent and the surface of the recessed bowl.
8. The security apparatus of clause 7, wherein the surface of each of the first finger and the second finger configured to engage the sidewall is located radially outward of the recessed bowl.
9. The security apparatus of clause 1, wherein the lock cylinder is the lock cylinder of a combination-style lock or the lock cylinder of a keyed lock.
10. The security apparatus of clause 1, wherein the forward edge of the body includes a plate member made of an abrasion-resistant material, wherein the surface of the alignment member is configured to engage the plate member.
11. The security apparatus of clause 1, wherein the alignment member is configured to prevent rotation of the security apparatus relative to the portable electronic device when positioned within the opening of the data port.
12. The security apparatus of clause 1, wherein the alignment member prohibits an off-center or askew insertion of the engagement mechanism into the opening in which the engagement mechanism makes contact with a data connector located within the data port.
13. The security apparatus of clause 1, wherein the engagement mechanism also includes a plunger coupled to the lock cylinder and configured to translate within the body between the first finger and the second finger to move the first and second fingers between the first position and the second position.
14. The security apparatus of clause 13, further comprising an input member coupled to the plunger and externally accessible on the body, wherein the input member is movable in response to an input by a user to translate the plunger relative to the body.
15. The security apparatus of clause 1, further comprising an elastic ring configured to bias the first finger and the second finger to the first position.
16. A security apparatus configured to extend through an opening of a data port to engage a sidewall of a portable electronic device, the security apparatus comprising:
   a body having an opening at a forward edge of the body;
   a lock cylinder located within the body;
      an engagement mechanism including a first finger and a second finger extending out of the body through an opening, wherein the lock cylinder is configured to move the first and second fingers between a first position in which the engagement mechanism is removable from the data port and a second position in which the engagement mechanism is secured to the data port, and wherein each of the first and second fingers includes a surface configured to engage the sidewall of the portable electronic device;
   wherein each of the first finger and the second finger includes an enlarged distal end having a raised lip defining a recessed bowl such that the raised lip is configured to extend around a data connector located within the data port, wherein the surface of each of the first finger and the second finger configured to engage the sidewall is formed on the raised lip.
17. The security apparatus of clause 16, wherein the raised lip defines an axial extent of each of the first and second fingers, wherein a surface of the recessed bowl is axially spaced apart from the raised lip, and wherein the surface of each of the first finger and the second finger configured to engage the sidewall is disposed axially between the axial extent and the surface of the recessed bowl.
18. The security apparatus of clause 17, wherein the surface of each of the first finger and the second finger configured to engage the sidewall is located radially outward of the recessed bowl.
19. The security apparatus of clause 16, wherein the raised lip of the first finger and the raised lip of the second finger collectively surround the recessed bowl, the recessed bowl formed in part by the first finger and in part by the second finger.
20. A security apparatus configured to extend through an opening formed in a sidewall of a portable electronic device, the security apparatus comprising:
   a body;
      a lock cylinder located within the body;
   an engagement mechanism including a first finger, a second finger, and a plunger configured to move the first finger and the second finger from a first position in which the engagement mechanism is removable from the opening to a second position in which the engagement mechanism is secured within the opening,
      wherein the first finger includes an enlarged distal end having a raised lip about a periphery of the enlarged distal end to define a recessed bowl within the raised lip, the raised lip defining a surface configured to engage the sidewall of the portable electronic device in the second position and disengage the sidewall of the portable electronic device in the first position; and
      wherein the second finger includes an enlarged distal end having a raised lip about a periphery of the enlarged distal end to define a recessed bowl within the raised lip, the raised lip defining a surface configured to engage the sidewall of the portable electronic device in the second position and disengage the sidewall of the portable electronic device in the first position.

## Claims

1. A security apparatus configured to extend through an opening of a data port to engage a sidewall of a portable electronic device, the security apparatus comprising:
a body having an opening at a forward edge of the body;
a lock cylinder located within the body;
an engagement mechanism including a first finger and a second finger extending out of the body through an opening, wherein the lock cylinder is configured to move the first and second fingers between a first position in which the engagement mechanism is removable from the data port and a second position in which the engagement mechanism is secured to the data port, and wherein each of the first and second fingers includes a surface configured to engage the sidewall of the portable electronic device; and
an alignment member configured to extend into the opening and remain within the opening when the engagement mechanism is in the second position, wherein the alignment member includes a surface configured to engage the forward edge of the body.

2. The security apparatus of claim 1, wherein the alignment member is integrally formed as a single component with the first finger and the second finger.

3. The security apparatus of claim 2, wherein the surface of each of the first and second fingers is parallel to the surface of the alignment member, and optionally, wherein the surface of the first finger is coplanar with the surface of the second finger, or wherein the surface of the first finger is offset from the surface of the alignment member by a step therebetween such that the surface of the first finger is radially and axially offset from the surface of the alignment member.

4. The security apparatus of any preceding claim, wherein each of the first finger and the second finger includes an enlarged distal end having a raised lip defining a recessed bowl such that the raised lip is configured to extend around a data connector located within the data port, and wherein the surface of each of the first finger and the second finger configured to engage the sidewall is formed on the raised lip.

5. The security apparatus of claim 4, wherein the raised lip defines an axial extent of each of the first and second fingers, wherein a surface of the recessed bowl is axially spaced apart from the raised lip, and wherein the surface of each of the first finger and the second finger configured to engage the sidewall is disposed axially between the axial extent and the surface of the recessed bowl, and optionally wherein the surface of each of the first finger and the second finger configured to engage the sidewall is located radially outward of the recessed bowl.

6. The security apparatus of any preceding claim, wherein the lock cylinder is the lock cylinder of a combination-style lock or the lock cylinder of a keyed lock.

7. The security apparatus of any preceding claim, wherein the forward edge of the body includes a plate member made of an abrasion-resistant material, wherein the surface of the alignment member is configured to engage the plate member.

8. The security apparatus of any preceding claim, wherein the alignment member is configured to prevent rotation of the security apparatus relative to the portable electronic device when positioned within the opening of the data port.

9. The security apparatus of any preceding claim, wherein the alignment member prohibits an off-center or askew insertion of the engagement mechanism into the opening in which the engagement mechanism makes contact with a data connector located within the data port.

10. The security apparatus of any preceding claim, wherein the engagement mechanism also includes a plunger coupled to the lock cylinder and configured to translate within the body between the first finger and the second finger to move the first and second fingers between the first position and the second position, and optionally, further comprising an input member coupled to the plunger and externally accessible on the body, wherein the input member is movable in response to an input by a user to translate the plunger relative to the body.

11. The security apparatus of any preceding claim, further comprising an elastic ring configured to bias the first finger and the second finger to the first position.

12. A security apparatus configured to extend through an opening of a data port to engage a sidewall of a portable electronic device, the security apparatus comprising:
a body having an opening at a forward edge of the body;
a lock cylinder located within the body;
an engagement mechanism including a first finger and a second finger extending out of the body through an opening, wherein the lock cylinder is configured to move the first and second fingers between a first position in which the engagement mechanism is removable from the data port and a second position in which the engagement mechanism is secured to the data port, and wherein each of the first and second fingers includes a surface configured to engage the sidewall of the portable electronic device;
wherein each of the first finger and the second finger includes an enlarged distal end having a raised lip defining a recessed bowl such that the raised lip is configured to extend around a data connector located within the data port, wherein the surface of each of the first finger and the second finger configured to engage the sidewall is formed on the raised lip.

13. The security apparatus of claim 12, wherein the raised lip defines an axial extent of each of the first and second fingers, wherein a surface of the recessed bowl is axially spaced apart from the raised lip, and wherein the surface of each of the first finger and the second finger configured to engage the sidewall is disposed axially between the axial extent and the surface of the recessed bowl., and optionally wherein the surface of each of the first finger and the second finger configured to engage the sidewall is located radially outward of the recessed bowl.

14. The security apparatus of claim 12 or 13, wherein the raised lip of the first finger and the raised lip of the second finger collectively surround the recessed bowl, the recessed bowl formed in part by the first finger and in part by the second finger.

15. A security apparatus configured to extend through an opening formed in a sidewall of a portable electronic device, the security apparatus comprising:
a body;
a lock cylinder located within the body;
an engagement mechanism including a first finger, a second finger, and a plunger configured to move the first finger and the second finger from a first position in which the engagement mechanism is removable from the opening to a second position in which the engagement mechanism is secured within the opening,
wherein the first finger includes an enlarged distal end having a raised lip about a periphery of the enlarged distal end to define a recessed bowl within the raised lip, the raised lip defining a surface configured to engage the sidewall of the portable electronic device in the second position and disengage the sidewall of the portable electronic device in the first position; and
wherein the second finger includes an enlarged distal end having a raised lip about a periphery of the enlarged distal end to define a recessed bowl within the raised lip, the raised lip defining a surface configured to engage the sidewall of the portable electronic device in the second position and disengage the sidewall of the portable electronic device in the first position.
